# EUROPÄISCHE PATENTANMELDUNG

(11) **EP 0 897 827 A2**
(43) Veröffentlichungstag der Anmeldung: **24.02.1999**
(21) Anmeldenummer: 98114036.1
(22) Anmeldetag: 28.07.1998
(51) Int. Cl.: B60P 7/00

(54) **Vorrichtung zum Entfernen von Eis-, Schnee- und Wasseransammlungen auf Planen**

(30) Priorität: 28.07.1997 DE 19732348
(71) Anmelder: Gellert, Holm, 23556 Lübeck (DE); Kraus, Stefan A., 23619 Badendorf (DE); Grotjan, Rüdiger, 23619 Badendorf (DE)
(72) Erfinder: Gellert, Holm, 23556 Lübeck (DE); Kraus, Stefan A., 23619 Badendorf (DE); Grotjan, Rüdiger, 23619 Badendorf (DE)
(74) Vertreter: Wilcken, Thomas, Dipl.-Ing.

(57) **Zusammenfassung**

Eine Vorrichtung (5) zum Entfernen von Eis-, Schnee- und Wasseransammlungen auf Planen (24), die in Verbindung mit Abdeckplanen von insbesondere Lastkraftwagen verwendet wird, bei denen die jeweilige Plane mit ihrem Oberteil von einem Lideflächengerüst (1) abgestützt wird, umfaßt mindestens ein oben an dem Gerüst (1) unterhalb des Planenoberteiles zu montierendes Hubelement (6), das, ausgehend von einer Ruheposition, mittels eines Antriebes (10) durch Anheben unter Straffung und spitzdachartiger Verformung (25) des Planenoberteiles in eine Arbeitsposition und durch Absenken wieder in die Ruheposition verstellbar ist.

## Beschreibung

Die Erfindung betrifft eine Vorrichtung zum Entfernen von Eis-, Schnee- und Wasseransammlungen auf Planen, insbesondere auf Planen von Fahrzeugen, bei denen die jeweilige Plane mit ihrem Oberteil von einem Gerüst abgestützt wird.

Der hinter der Fahrerkabine befindliche Ladeaufbau eines Lkw oder auch derjenige eines Lkw-Anhängers weist häufig ein Gerüst bestimmter Höhe auf, auf dem eine Abdeckplane vorgesehen ist, die das Gerüst allseitig umgibt, um die betreffende Ladefläche bzw. um die darauf vorhandene Ladung insbesondere vor Regen und Schnee zu schützen. Das allgemein bekannte Gerüst besteht hauptsächlich aus querstehenden Spriegeln und aus sich darauf abstützenden, längsverlaufenden und voneinander einen Abstand aufweisenden Stäben und/oder Latten. Nachteilig bei dieser Konstruktion ist, daß, wenn sich bei stehendem Lkw Schnee und Regenwasser in Form von Wasserlachen auf dem oberen Bereich der Abdeckplane zwischen den Stäben ansammelt, wobei das Wasser im Winter gefrieren kann, diese Massen oft eine Gefahr für den nachfolgenden Straßenverkehr darstellen, wenn sie nicht vor Fahrtantritt entfernt werden. Durch den Fahrtwind werden die Massen dann nach hinten abgeweht oder durch die Fahrzeugbewegungen in Verbindung mit der sich teilweise aufblähenden Plane nach hinten abgeschüttelt, wodurch nachfolgende Fahrzeuge gefährdet werden. Insbesondere wenn das auf der Plane befindliche Wasser im Winter gefroren ist, kann der nachfolgende Verkehr durch herabfallendes Eis erheblich geschädigt werden. Das vorherige Entfernen der Regenwasser-, Eis- oder Schneeansammlungen ist umständlich und zeitraubend, weil es in der Regel mit einer Stange oder dergleichen erfolgt, mit der die Abdeckplane von unten punktuell oder bereichsweise angehoben wird, so daß die betreffenden Mengen seitlich abrutschen können. Bei Eis- und Schneeansammlungen muß gegebenenfalls eine Leiter an das Gerüst angestellt werden, um die betreffenden Mengen dann von der Oberseite der Plane mit einem Besen abzufegen. Auch hierbei kann nicht ausgeschlossen werden, daß noch Reste auf der Plane verbleiben, die sich später durch den Fahrtwind entfernen und daher noch eine Gefahr für den nachfolgenden Verkehr darstellen können.

Die Aufgabe der Erfindung besteht in der Schaffung einer Vorrichtung der einleitend angeführten Art, mit der es möglich ist, Eis-, Wasser- und Schneeansammlungen auf Abdeckplanen von ortsbeweglichen, der Witterung ausgesetzten Gütertransporteinrichtungen auf einfache und schnelle Weise zu entfernen.

Die Lösung der Aufgabe ist in dem Anspruch 1 angegeben.

Mit der erfindungsgemäßen Vorrichtung ist es auf einfache und schnelle Weise möglich, Ansammlungen von Regenwasser, Eis und Schnee, die sich auf der Oberseite der Plane angesammelt haben, wenn die betreffenden Lkws, deren Anhänger, aber auch Container und Güterwagen, die mit entsprechenden Planen oben abgedeckt sind, von diesen Transporteinrichtungen zu entfernen, wenn diese bei entsprechenden Witterungsverhältnissen, insbesondere über Nacht, im Freien gestanden haben. Das Hubelement, das an der Unterseite der Plane anliegt, wird nach oben ausgefahren, wobei sich der Planenoberteil spitzdachartig verformt, wodurch die Plane allseitig nach unten geneigte Schrägflächen annimmt, so daß die betreffenden Ansammlungen insgesamt gleichzeitig schräg seitlich abrutschen. Es hat sich herausgestellt, daß auf diese Weise eine vollständige Entfernung der betreffenden Mengen stattfindet, da die vorübergehend gebildeten Schrägflächen des Planenoberteiles im wesentlichen straff gespannt sind, so daß eine gute Ablauf-oder oder Abrutschwirkung erzielt wird.

Eine vorteilhafte Ausgestaltung der erfindungsgemäßen Vorrichtung besteht darin, daß die vom Hubelement von unten auf das Planenoberteil ausgeübte Hubkraft auf einen Maximalwert begrenzt werden kann. Dadurch wird die Plane gegen Zerreißen geschützt.

Nach einem weiteren Ausgestaltungsmerkmal verläuft das Hubelement bei seiner Einbaulage horizontal und hält diese Lage auch während seiner Verstellung bei. Hierdurch erfolgt eine gleichmäßige Anhebung des Planenoberteiles.

Eine günstige und einfache Anbringungsweise der erfindinngsgemäßen Vorrichtung besteht darin, daß das als längliches Profil ausgebildete Hubelement mit Befestigungsmitteln längsmittig am Planengerüst befestigbar ist.

Ein einfacher Aufbau der Vorrichtung besteht darin, daß das Hubelement den oberen Teil eines Gestelles bildet, das mit seinem unteren Teil am Gerüst des Lastkraftwagens oder dergleichen zu befestigen ist, daß der obere und der untere Teil des Gestelles mit scherenartig über Kreuz angeordneten Lenkern verbunden sind und daß der Antrieb für das Hubelement zwischen den beiden erwähnten Teilen des Gerüstes wirksam ist.

Da Lastkraftwagen in der Regel eine eigene Fluiddruckquelle besitzen, besteht ein weiteres vorteilhaftes Merkmal der Vorrichtung darin, daß der vorerwähnte Antrieb an die fahrzeugeigene Fluiddruckquelle anschließbar ist.

Weitere Vorteile der erfindungsgemäßen Vorrichtung ergeben sich aus den weiteren Unteransprüchen.

Die Erfindung ist nachstehend anhand eines in der anliegenden Zeichnung dargestellten Ausführungsbeispieles näher erläutert. Es zeigen:
- Fig. 1: eine teilweise Seitenansicht auf den Ladenflächengerüstaufbau ohne Abdeckplane für einen Lastkraftwagen,
- Fig. 2: eine Aufsicht auf die Darstellung nach Fig. 1,
- Fig. 3: eine Endansicht gemäß dem Pfeil A in Fig. 1,
- Fig. 4: eine Seitenansicht auf das Ausführungsbeispiel in ausgefahrenem Zustand,
- Fig. 5: eine Seitenansicht auf das Ausführungsbeispiel in eingefahrenem Zustand,
- Fig. 6: eine Endansicht gemäß dem Pfeil B in Fig. 4 in größerem Maßstab in ausgefahrenem Zustand des Ausführungsbeispieles,
- Fig. 7: das Ausführungsbeispiel nach Fig. 6 in eingefahrenem Zustand,
- Fig. 8 und 9: das Ausführungsbeispiel in End- bzw. Seitenansicht in ausgefahrenem Zustand mit Abdeckplane,
- Fig. 10: eine Ansicht auf ein Schutzelement des Ausführungsbeispieles,
- Fig. 11: eine Schnittdarstellung nach der Linie XI-XI in Fig 10,
- Fig. 12: eine teilweise Schnittdarstellung einer Befestigungsart des Ausführungsbeispieles am oberen Gerüstbereich des Lastkraftwagens,
- Fig. 13: ein fluidisches Steuerschema zur Betätigung des Ausführungsbeispieles.

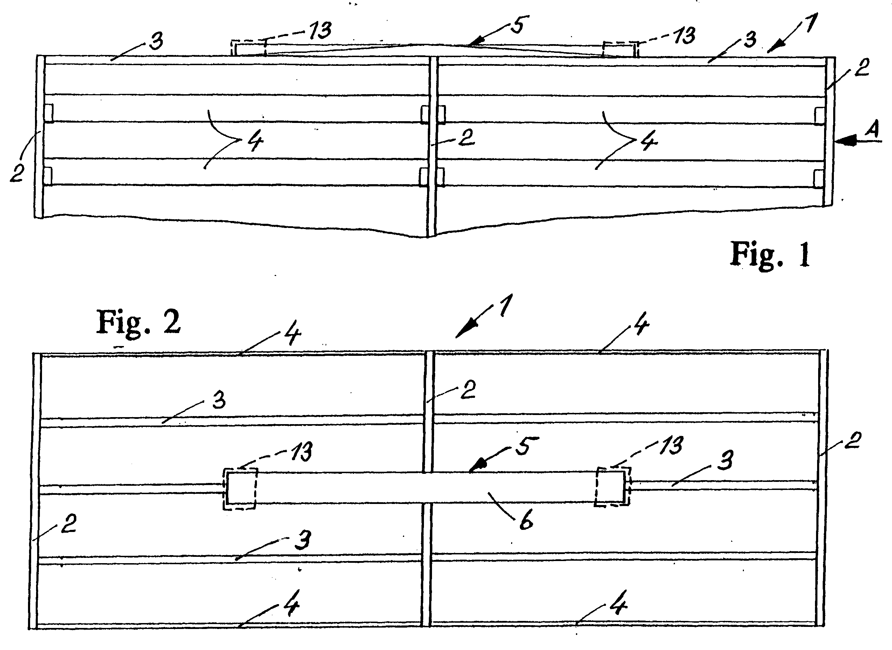

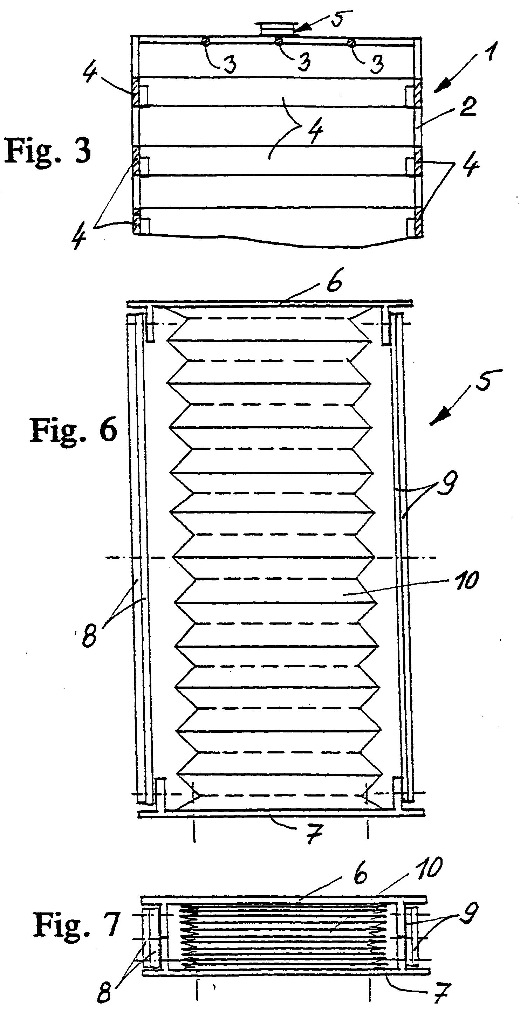

Gemäß den Fig. 1, 2 und 3 besteht das allgemein bekannte Gerüst 1 für den Ladeflächenaufbau eines Lastkraftwagens aus mehreren, querstehenden, oben horizontalen Spriegeln 2, die insbesondere im oberen Bereich durch mehrere, längsverlaufende Stäbe 3 miteinander verbunden sind. Seitliche Latten 4 stützen sich an den seitlichen Teilen der Spriegel 2 ab. Auf der oberen Längsmitte des Gerüstes 1 ist eine allgemein mit 5 bezeichnete Vorrichtung zum Entfernen von Eis-, Schnee- und Wasseransammlungen auf einer Plane, die das Gerüst 1 allseitig umgibt und der besseren Übersicht wegen in den Fig. 1, 2 und 3 weggelassen ist, anbringbar.

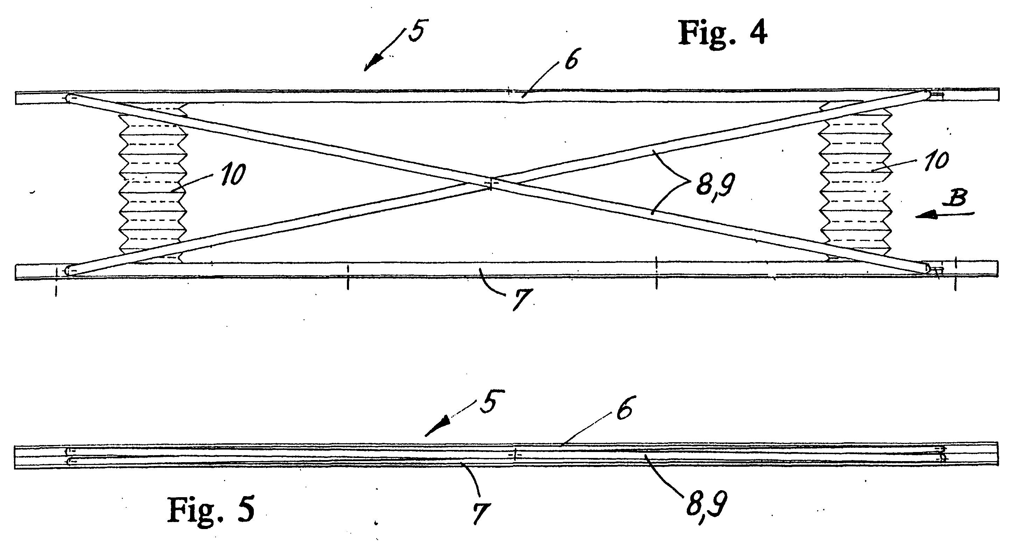

In den Fig. 4 bis 7 ist die Vorrichtung 5 genauer zu erkennen. Sie umfaßt ein oberes, längliches, plattenartiges Hubelement 6, das beispielsweise als U-förmiges oder im wesentlichen U-förmiges Profil aus Aluminium hergestellt sein kann, ein ebensolches unteres Element 7, das an dem Gerüst 1 befestigbar ist, und zwei seitliche Lenkerpaare, die jeweils aus zwei scherenartig über Kreuz angeordneten Lenkern 8 bzw. 9 bestehen und die beiden Elemente 6 und 7 miteinander verbinden und wenigstens einen Antrieb 10, vorzugsweise zwei Antriebe 10, wie es Fig. 4 deutlich zeigt, um das obere Hubelement 6 nach oben ausfahren und wieder einziehen zu können. Die Teile 6 bis 9 bilden zusammen ein Gestell der Vorrichtung 5. Jeder Antrieb 10 ist zwischen dem oberen Hubelement 6 und dem unteren Befestigungselement 7 wirksam.

Wie insbesondere Fig. 1 zeigt, wird die Vorrichtung 5 in horizontaler Lage oben an dem Gerüst 1 angebaut. Aufgrund der Scherenlenker 8 und 9 verläuft damit das Hubelement 6 in seiner Einbaulage horizontal und behält diese horizontale Lage bei, wenn es aufwärts und abwärts verstellt wird.

Die Aufwärts- und Abwärtsbewegung des Hubelementes 6 mittels der Antriebe 10 erfolgt fluidisch, insbesondere pneumatisch, wozu jeder Antrieb über ein Schlauch- und Steuersystem an eine Fluiddruckquelle anschließbar ist. Als solche Fluiddruckquelle für den oder jeden Antrieb 10 kann die fahrzeugeigene Fluiddruckquelle verwendet werden, beispielsweise diejenige Luftdruckquelle, die für das Bremssystem eines Lastkraftwagens (Lkw) bestimmt ist. Es ist aber auch möglich, eine gesonderte Fluiddruckquelle zu verwenden. Dies wird zum Beispiel bei Containern oder Güterwaggons der Fall sein, wenn diese mit einer Abdeckplane und einem Traggestell verschlossen sind und die von Eis-, Schnee- und Wasseransammlungen befreit werden sollen.

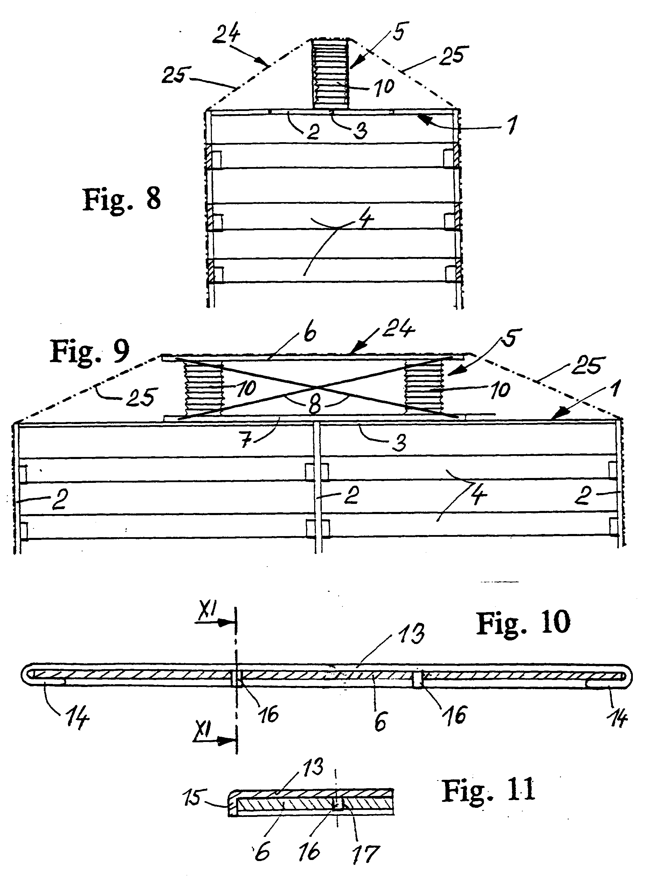

Der oder jeder Antrieb 10 kann aus einem in seiner Länge veränderbaren, stehend zwischen dem oberen und unteren Teil 6, 7 des erwähnten Gestelles der Vorrichtung 5 wirksamen und mit diesen Teilen verbundenen Druckkörper bestehen. Eine bevorzugte Ausführungsform für einen solchen Druckkörper besteht in einem Faltenbalg, wie er in den Fig. 4 und 6 angedeutet ist.

Durch das erwähnte und nachstehend beschriebene Schlauch- und Steuersystem ist die von jedem Antrieb 10 bzw. vom Faltenbalg auf das Hubelement 6 und damit die von diesem Hubelement von unten auf den Planenoberteil ausgeübte Hubkraft auf einen Maximalwert begrenzt bzw. begrenzbar, um den Planenoberteil gegen Zerstörung zu schützen.

Das als längliches Profil ausgebildete Hubelement 6 ist mit Befestigungsmitteln längsmittig am Planengerüst 1 mittelbar befestigbar. Hierzu kann so vorgegangen sein, daß das untere Element 7, an dem das obere Hubelement 6 mittels der Lenker 8 und 9 angelenkt mittels einer Schelle 11 und einer Gegenplatte 12 an einem Längsstab 3 des Gerüstes 1 befestigt ist. Vorteilhaft sind wenigstens zwei Befestigungseinrichtungen 11, 12 vorgesehen, mit denen das untere Element 7 in seinen Endbereichen an dem Längsstab 3 befestigt ist.

Um zu vermeiden, daß der Planenoberteil durch die Kantenbereiche des Hubelementes 6 beschädigt wird, ist das das Hubelement 6 bildende längliche Flachprofil an den oberen Kanten seiner Längs- und Stirnseiten abgerundet ausgebildet. Somit können diese Rundungen, die beim Anheben des Planenoberteiles mit diesem in Berührung kommen, die betreffenden Planenbereiche nicht zerstören.

Alternativ oder zusätzlich kann zum Schutz des Planenoberteiles auch so vorgegangen sein, daß die Enden des Hubelementes 6 auf seiner dem Planenoberteil zugekehrten Seite mit einer Kappe 13 abgedeckt sind, welche teilweise die Längs- und die Stirnseiten des als längliches Flachprofil ausgebildeten Hubelementes abgerundet übergreifen, wie dies in den Fig. 1 und 2 gestrichelt angedeutet ist.

Die Fig. 10 und 11 zeigen eine solche Kappe 13 in deutlicher Form. Man erkennt die Seitenbereiche 14 und 15 der Kappe 13, die außen gerundet ausgeführt sind und das Hubelement 6 umgreifen. Mittels Zapfen 16 wird die jeweilige Kappe 13 in Löchern 17 des Hubelementes 6 gehalten.

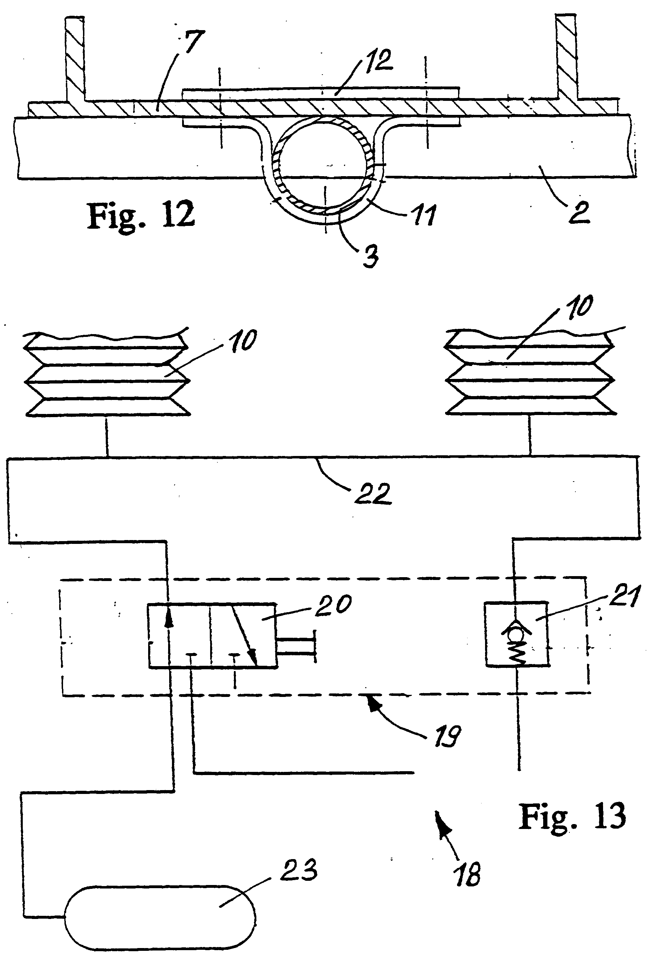

Fig. 13 zeigt ein Schlauch- und Steuersystem 18 für die vorstehend beschriebene Vorrichtung 5. Es umfaßt eine Steuereinrichtung 19 mit einem Steuerventil 20 und einem Überdruckventil 21 und ist über eine Schlauchleitung 22 sowohl mit einer Fluiddruckquelle 23 als auch mit dem oder jedem Antrieb 10 fluidisch verbunden. Das fluidische Steuerventil 20 weist wenigstens zwei Schaltstellungen auf, wobei dessen erste Schaltstellung den oder jeden oder Antrieb 10 mit der Fluiddruckquelle 23 verbindet und, wenn das Steuerventil umgeschaltet ist, dessen zweite Schaltstellung das Schlauchsystem den oder jeden Antrieb drucklos hält. Das Überdruckventil 21 sorgt dafür, daß der Fluiddruck des dem Antrieb 10 zugeführten Fluids auf einen vorbestimmten Höchstdruck begrenzt wird. Des weiteren sind die freien Durchlaßquerschnitte des Steuerventiles 20 und des Überdruckventiles 21 so bemessen, daß der freie Durchlaß des in Offenstellung befindlichen Überdruckventiles größer ist als der freie Durchlaß des in der ersten Schaltstellung befindlichen Steuerventiles, um eine sichere Funktion des Überdruckventiles zu gewährleisten.

Anhand der Fig. 8 und 9 ist die Wirkungsweise der vorstehend beschriebenen Vorrichtung 5 gut zu erkennen. Diese Figuren zeigen die Vorrichtung 5 in ausgefahrenem Zustand, d. h., das Hubelement 6 gelangt in seine obere Arbeitsposition. Man erkennt, daß die strichpunktiert dargestellte Abdeckplane 24, die als Bestandteil des Gerüstes 1 zu betrachten ist, um die Ladung eines Lkws gegen Witterungseinflüsse zu schützen, mittels des Hubelementes im wesentlichen spitzdachförmig verformt ist, so daß sich gestraffte Dachschrägen 25 ausgebildet haben. Es ist ohne weiteres verständlich, daß, wenn sich Eis-, Schnee- und Wasseransammlungen auf der Oberseite des Planenoberteiles der Plane 24 gebildet haben, diese Ansammlungen über die Schrägen 25 allseitig seitlich sicher abrutschen. Nach dem Abrutschen wird der oder jeder Antrieb 10 wieder eingefahren, d. h., das Hubelement 6 gelangt in seine untere Ruheposition, was durch das Eigengewicht des Hubelementes unterstützt wird, wenn die Faltenbälge 10 drucklos sind.

In der vorstehenden Beschreibung ist nur eine Vorrichtung 5 für ein Gerüst 1 beschrieben. Es ist jedoch auch ohne weiteres möglich, mehrere Vorrichtungen 5 oben an einem Gerüst 1 eines Lkws vorzusehen. Dies wird man dann anordnen, wenn es sich bei dem Gerüst 1 entsprechend einer langen Ladefläche um ein entsprechend langes Gerüst 1 handelt. Man wird dann zwei oder gegebenenfalls mehr Hubelemente 6 bzw. Vorrichtungen 5 in Längsrichtung hintereinander anordnen. Des weiteren kann man auch so vorgehen, daß ein Hubelement oder mehrere Hubelemente 6 in Querrichtung des die Plane abstützenden Gerüstes vorgesehen sein können. Schließlich ist es auch möglich, an die beiden Enden des oder jedes länglichen Hubelementes horizontale Verlängerungsstücke anzusetzen, um mit so wenigen Vorrichtungen 5 wie möglich auszukommen und dabei ein sicheres Beseitigen der in Rede stehenden Ansammlungen zu gewährleisten.

Die vorstehend erläuterte Vorrichtung kann auch vorbeugend eingesetzt werden, um von vornherein zu vermeiden, daß insbesondere Wasseransammlungen und damit Eisbildungen auf den Planenoberteilen der Planen 24 entstehen können. Hierzu wird, wenn der Lastkraftwagen und/oder der zugehörige Anhänger im Freien abgestellt worden ist, das Hubelement 6 mittels des Antriebes 10 in die Arbeitsposition hochgefahren und in dieser Position festgestellt. Das Regenwasser läuft dann sofort ab und kann keine Wasserlachen bilden. Wird der Lastkraftwagen bzw. der Anhänger wieder benutzt bzw. gefahren, wird das Hubelement 6 vorher wieder in seine Ruheposition eingefahren.

## Patentansprüche

1. Vorrichtung (5) zum Entfernen von Eis-, Schnee- und Wasseransammlungen auf Planen (24), insbesondere auf Planen von Fahrzeugen, bei denen die jeweilige Plane mit ihrem Oberteil von einem Gerüst (1) abgestützt gekennzeichnet durch mindestens ein oben am Gerüst (1) unterhalb des Planenoberteiles zu montierendes Hubelement (6), das ausgehend von einer Ruheposition mittels eines Antriebes (10) durch Anheben unter Straffung und spitzdachartiger Verformung (25) des Planenoberteiles in eine Arbeitsposition und durch Absenken wieder in die Ruheposition verstellbar ist.

2. Vorrichtung nach Anspruch 1, dadurch Gekennzeichnet, daß die vom Hubelement (6) von unten auf den Planenoberteil (25) ausgeübte Hubkraft auf einen Maximalwert begrenzt bzw. begrenzbar ist.

3. Vorrichtung nach einem der Ansprüche 1 und 2, dadurch gekennzeichnet, daß das Hubelement (6) bei Einbaulage horizontal verläuft und in horizontaler Lage verbleibend verstellbar ist.

4. Vorrichtung nach einem der Ansprüche 1 bis 3, dadurch gekennzeichnet, daß das als längliches Profil ausgebildete Hubelement (6) mit Befestigungsmitteln (11, 12) längsmittig am Planengerüst (1) befestigbar ist.

5. Vorrichtung nach einem der Ansprüche 1 bis 4, dadurch gekennzeichnet, daß das Hubelement (6) den oberen Teil eines Gestelles bildet, das mit einem unteren Teil (7) am Gerüst (1) zu befestigen ist, daß der obere und der untere Teil des Gestelles mit scherenartig über Kreuz angeordneten Lenkern (8, 9) verbunden sind und daß der Antrieb (10) zwischen den beiden erwähnten Teilen (6, 7) des Gerüstes (1) wirksam ist.

6. Vorrichtung nach einem der Ansprüche 1 bis 5, dadurch gekennzeichnet, daß der Antrieb (10) fluidisch, insbesondere pneumatisch, betreibbar ist und über ein Schlauch- und Steuersystem (18) an eine Fluiddruckquelle (23) anschließbar ist.

7. Vorrichtung nach Anspruch 6, dadurch gekennzeichnet, daß der Antrieb (10) an eine fahrzeugeigene Fluiddruckquelle anschließbar ist.

8. Vorrichtung nach einem der Ansprüche 6 und 7, dadurch gekennzeichnet, daß der Antrieb (10) aus mindestens einem durch Einleiten von Fluiddruckmittel in seiner Lange veränderbaren, stehend zwischen dem oberen und unteren Teil des Gestelles (6-9) wirksamen und mit diesen Teilen verbundenen Druckkörper besteht.

9. Vorrichtung nach Anspruch 8, dadurch gekennzeichnet, daß der Druckkörper (10) als zylindrischer Faltenbalg ausgebildet ist.

10. Vorrichtung nach einem der Ansprüche 6 bis 9, dadurch gekennzeichnet, daß im Schlauch- und Steuersystem (18) ein Steuerventil (20) mit mindestens zwei Schaltstellungen vorgesehen ist, das bei einer ersten Schaltstellung den Antrieb mit der Fluiddruckquelle (23) verbindet und bei einer anderen, zweiten Schaltstellung das Schlauchsystem (22) und den Antrieb drucklos hält.

11. Vorrichtung nach einem der Ansprüche 6 bis 10, dadurch gekennzeichnet, daß im Schlauch- und Steuersystem (19) ein Überdruckventil (21) zur Begrenzung des größmöglichen Druckes des dem Antrieb (10) zugeführten Fluids vorgesehen ist.

12. Vorrichtung nach den Ansprüchen 10 und 11, dadurch gekennzeichnet, daß der freie Durchlaß des in Offenstellung befindlichen Überdruckventiles (21) größer ist als der freie Durchlaß des in der ersten Stellung befindlichen Steuerventiles (20).

13. Vorrichtung nach einem der Ansprüche 1 bis 12, dadurch gekennzeichnet, daß das im wesentlichen als längliches Flachprofil ausgebildete Hubelement (6) an den mit dem Planenoberteil (25) in Berührung gelangenden Längs- und Stirnseiten abgerundet ist.

14. Vorrichtung nach einem der Ansprüche 1 bis 12, dadurch gekennzeichnet, daß die Endbereiche des Hubelementes (6) auf seiner dem Planenoberteil (25) zugekehrten Seite mit einer Kappe (13) abgedeckt sind, welche teilweise die Längs- und die Stirnseiten des als längliches Flachprofil ausgebildeten Hubelementes abgerundet übergreift.
